# EUROPÄISCHE PATENTSCHRIFT

(11) **EP 0 701 881 B1**
(45) Veröffentlichungstag und Bekanntmachung des Hinweises auf die Patenterteilung: **17.06.1998**
(21) Anmeldenummer: 95114087.0
(22) Anmeldetag: 08.09.1995
(51) Int. Cl.: B23Q 7/14, B23Q 16/00

(54) **Bearbeitungssystem**
Machining system
Système d'usinage

(30) Priorität: 13.09.1994 DE 4432289
(43) Veröffentlichungstag der Anmeldung: 20.03.1996
(73) Patentinhaber: A RÖMHELD GmbH & CO KG, D-35317 Laubach 1 (DE)
(72) Erfinder: Zachau, Henning, Prof. Dr., D-01217 Dresden (DE); Ehrhardt, Winfried, Dr., D-35321 Laubach (DE); Staudenmaier, Siegfried, D-35321 Laubach (DE)
(74) Vertreter: Bischof, Hans-Jochen, Dipl.-Ing.

(56) Entgegenhaltungen:
- EP-A- 0 130 905
- EP-A- 0 176 158
- EP-A- 0 376 224
- WO-A-90/09866
- US-A- 4 190 240

## Beschreibung

Die Erfindung bezieht sich auf eine Montageeinrichtung, die verschiedenen Bearbeitungsstationen auf einem Arbeitstisch positionierbar und umsetzbar zugeführt ist, mit einer an einem Druckluftsystem angeschlossenen Palette. Die Unterseite der Palette ist mit Gleit- und Festzetzelementen bestückt, die mit dem Druckluftsystem verbunden sind. Das Druckluftsystem besitzt eine Steuereinrichtung zur Luftströmungsumkehr, so daß bei anstehendem Druck unterhalb der Palette ein Überdruck entsteht, der zum Aufschwimmen der Palette aufdem Arbeitstisch führt und bei Unterdruck ein Vakuum entsteht, durch das die Palette aufdem Arbeitstisch festgesetzt wird.

Es ist bekannt in der Fertigungsmontage verschiedene Werkzeuge nacheinander ortsfest zuzuordnen, und das zu bearbeitende Werkstück nach jedem Arbeitsgang umzusetzen. Es ist auch bekannt, die Werkstücke auf einem Fließband von Ort zu Ort zu transportieren. Die Werkzeugaufnahme ist jedoch ortsfest, so daß die Werkstücke bei jedem Arbeitsgang erneut positioniert und gespannt werden müssen.

Es ist eine Montageeinrichtung bekannt ( US Patentschrift 4 190 240 ), die verschiedenen Bearbeitungsstationen auf einem Arbeitstisch positionierbar und umsetzbar zugeführt ist. Diese Montageeinrichtung besteht aus einer Palette, an deren Unterseite ein Gleit- und Festsetzelement angeordnet ist. Die Palette ist mit einem Druckluftsystem verbunden, wobei die Druckluft unterhalb der Palette im Gleit- und Festsetzelement austritt. Durch eine Steuerung kann somit Druckluft unter die Palette geführt werden, so daß diese aufschwimmt und verschiebbar ist. Oder es kann ein Vakuum erzeugt werden, womit die Palette aufdem Arbeitstisch festsetzbar ist.

Der Erfindung liegt die Aufgabe zugrunde, ein System zu schaffen, bei dem das zu bearbeitende Werkstück nur einmal gespannt wird und dann jedem Bearbeitungsvorgang und Bearbeitungsort zuführbar ist und in seiner Lage so veränderbar ist, daß die Bearbeitung an mehreren Seiten des Werkstückes durchführbar ist.

Die Lösung der Aufgabe ist den kennzeichnenden Merkmalen der Ansprüche zu entnehmen.

Der Vorteil liegt darin, daß durch eine Aufnahme des Werkstückes alle Bearbeitungsvorgänge nacheinander auch an verschiedenen Orten durchführbar sind, bis hin zur Prüfung bzw. Abnahme, Ein weiterer Vorteil stellt sich dadurch ein, daß der Transport ohne Kraftaufwand möglich ist und daß dennoch das Werkstück positioniert jedem Bearbeitungsvorgang zugeführt wird.

In den Figuren ist die Erfindung näher beschrieben.

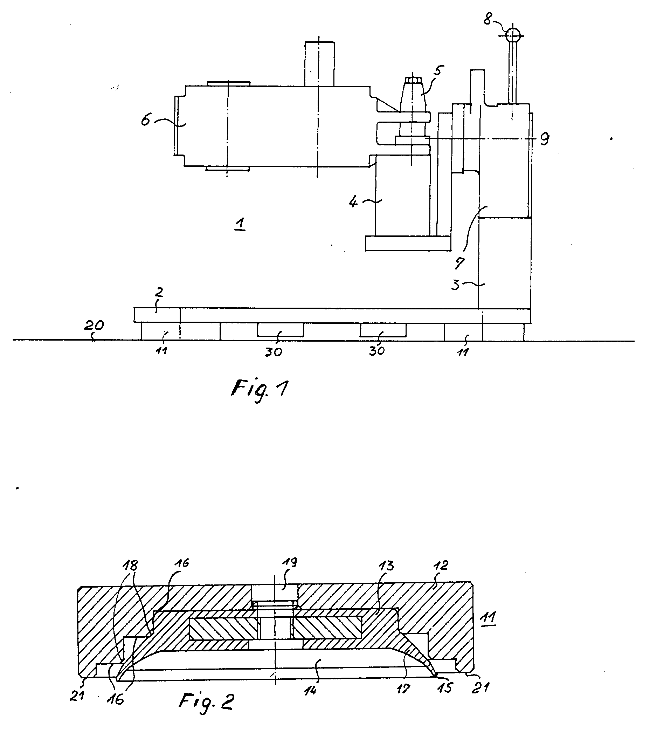

- Fig. 1: zeigt den Aufbau einer für die Werkzeugaufnahme bestimmten Montageeinrichtung
- Fig. 2: zeigt ein Gleit- und Festsetzelement

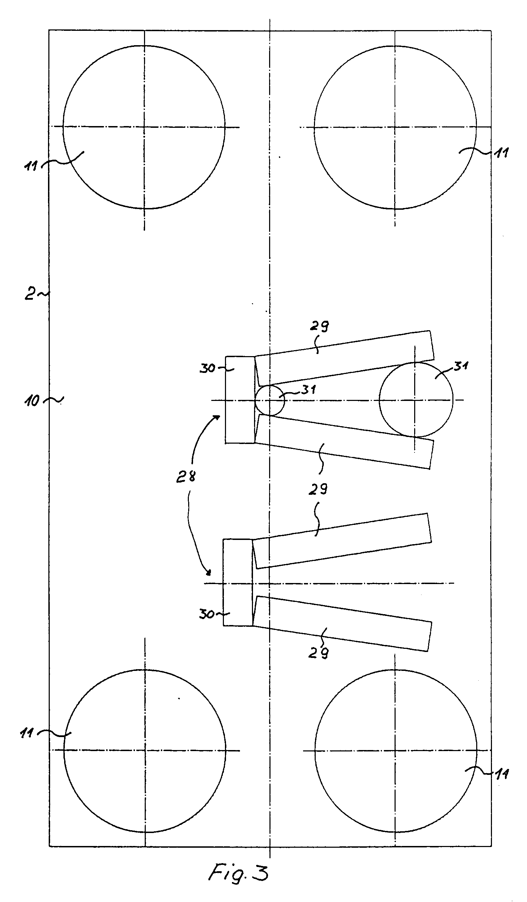

- Fig. 3: zeigt die Unterseite einer Montagepalette

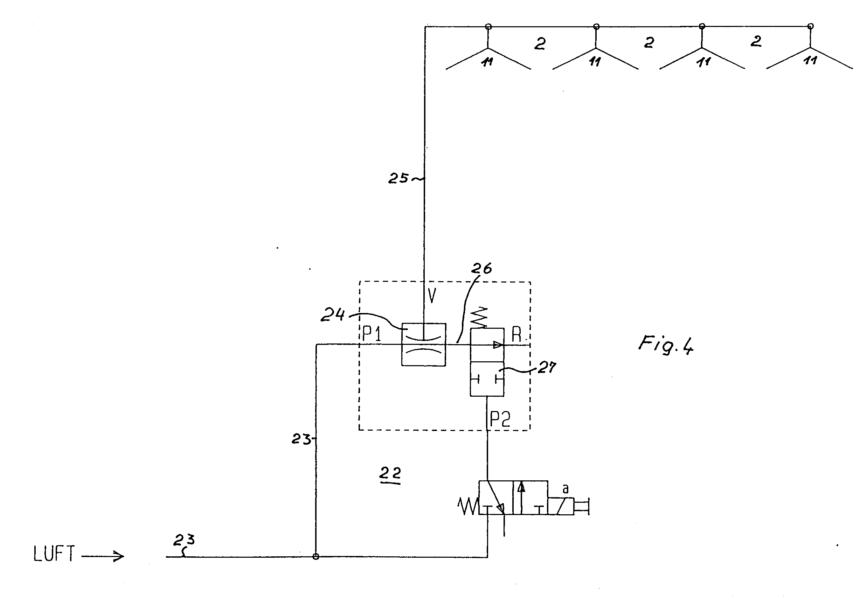

- Fig. 4: zeigt das Steuersystem.

Das Bearbeitungssystem besteht aus einem Tisch oder einer Arbeitsplatte, auf der mehrere Montageeinrichtungen und mehrere Bearbeitungsgeräte aufgebracht werden können.

Die Montageeinrichtung 1 besteht aus einer Palette 2 bestückt mit einer Werkstückaufnahmevorrichtung 3. Die Werkstückaufnahmevorrichtung 3 ist bestückt mit einer Werkstückspannvorrichtung 4, die einen Aufnahmedorn 5 besitzt, auf den das Werkstück 6 gespannt ist. Die Spannvorrichtung 4 ist in der Werkstückaufnahmevorrichtung 3 drehbar gelagert in dem Schwenkkopf 7. Dieser Schwenkkopf 7 gestattet das Schwenken des Werkstückes 6 in vier Lagen, so daß das Werkstück 6 in vier verschiedene Bearbeitungspositionen gebracht werden kann. Dazu wird der Hebel 8 betätigt, dessen Schwenkbereich das Werkstück 6 mit jeder Betätigung um 90° schwenkt. Die Werkstückspannvorrichtung 4 wird hierbei um die Drehachse 9 gedreht. Damit läßt sich das Werkstück 6 in vier verschiedene Bearbeitungspositionen bringen, die sowohl eine vertikale als auch eine horizontale Bearbeitung gestatten.

Das Kernstück dieser Montageeinrichtung ist die Palette 2 mit ihren Bestückungen und damit verbundenen Möglichkeiten. An der Unterseite 10 der Palette 2 sind vier Gleit-und Festsetzelemente 11 angeordnet. Diese kreisförmigen Elemente bestehen aus einem Metallkörper 12 und einem aus elastischen Material bestehenden Einsatzteil 13. Das Einsatzteil 13, vorzugsweise aus Gummi, ist glockenförmig gebildet, so daß in seinem Innern ein Hohlraum 14 entsteht, der durch die umlaufende Lippenwulst 15 abgeschlossen ist. Der Metallkörper 12 ist zur Aufnahme des Einsatzteiles 13 entsprechend ausgebildet, und zwar in Stufen 16. Diese Stufen 16 sind so berechnet, daß sich das Einsatzteil 13 mit seiner äußeren den Hohlraum 14 abschließenden Wulst 17 an die abgerundeten Kanten 18 glatt anlegt. Ferner ist die unterste der Stufen 16 im Durchmesser größer als der äußere Durchmesser des Einsatzteiles 13. Durch diese Maßnahme wird erreicht, daß im Betrieb das Element 11 nahezu geräuschlos arbeitet.

In der Mitte des Elementes 11 ist eine durchgehende Bohrung 19 eingebracht, die eine offene Verbindung vom Hohlraum 14 zum Oberteil des Metallkörpers 12 herstellt. Im Metallkörper 12 ist an diese Bohrung ein Kanal angeschlossen, durch den Luft zu-oder abgeleitet werden kann. Dieser Kanal ist innerhalb der Palette 2 geführt, so daß alle von den Gleit- und Festsetzelementen 11 ankommenden Kanäle in einem Anschlußstück enden.

Die so an der Palettenunterseite 10 angeordneten Elemente 11 bilden somit die Füsse, auf denen die Palette steht. Diese Palette wird auf einen Arbeitstisch 20 mit glatter Fläche gestellt. Die Fläche des Tisches ist eine Metallplatte mit glatter Oberseite, die jedoch keiner speziellen Bearbeitung bedarf. Wird nun die an ein Druckluftsystem angeschlossene Palette 2 mit Druckluft beaufschlagt, so lassen sich zwei Steuerfunktionen einleiten. Wird die Druckluft in die Kanalführung der Palette 2 gegeben, so tritt sie in der Mitte eines jeden Elementes 11 ein, dringt durch die Bohrung 19 in den Hohlraum 14 ein und tritt infolge Überdrucks am Lippenwulstrand 15 aus. Durch diesen Überdruck, der sich im Hohlraum 14 bildet, wird die gesamte Palette 2 um ca. 1mm angehoben. Damit wird ihr Gewicht weitestgehend eleminiert, so daß die Palette 2 auf dem so entstandenen Luftpolster leicht gleitend bewegt werden kann. Versuche haben gezeigt, daß die unter Druckluft stehende Palette 2 schon bei der geringsten Schräglage des Arbeitstisches sich von allein bewegt. Aus diesem Grund ist die Arbeitstischplatte umlaufend mit einer Wulst versehen.

Wird nun die Druckluftrichtung umgekehrt, so wird die Luft aus dem Kanalsystem und damit auch aus den Hohlräumen 14 abgesaugt. Im Hohlraum 14 entsteht ein Unterdruck, die Lippenwulst 15 preßt sich gegen die Tischplatte. Die Palette 2 wird abgesenkt bis der glatte Rand 21 des Metallkörpers 12 auf der Tischplatte aufliegt. Die Stufengebung im Metallkörper 12 und die Wulst 17 mit ihrer Lippenwulst 15 sorgen für einen dichten Abschluß, in dem ein Vacuum im Hohlraum 14 aufrechterhalten bleibt. Die Palette 2 ist unverrückbar auf dem Arbeitstisch 20 festgehalten. Dieses auch bei großen Kräften, die infolge der Bearbeitung des Werkstückes entstehen.

Die Steuerung des Luftstromes erfolgt mittels einer pneumatischen Steuereinrichtung 22. Druckluft wird über Kanal 23 in das System eingeleitet. In diesem Kanal 23 liegt ein Ejektor 24. Im Ejektor 24 verzweigt sich der Kanal 23 in einen zur Palette 2 führenden Verbindungskanal 25 und in einen Austrittskanal 26. Im Austrittskanal 26 ist ein Ventil 27 angeordnet, das ein Öffnen oder Schließen dieses Kanals 26 ermöglicht.

Wird Druckluft in Kanal 23 gegeben und ist Ventil 27 geschlossen, so strömt die Luft durch den Ejektor 24 in den Verbindungskanal 25, von dort zur Palette 2 und tritt an den Elementen 11 aus. Unter der Palette 2 herrscht Überdruck. Wird nun das Ventil 27 geöffnet, strömt die Luft durch den Ejektor 24 zum Austrittskanal 26 und von dort ins Freie.

Gleichzeitig wird im Ejektor 24 die Luft aus dem Verbindungskanal 25 abgesaugt und ebenfalls dem Ausgang vom Austrittskanal 26 zugeführt. Damit entsteht in der Palette 2 und in ihren Elementen ein Unterdruck, die Palette sitzt unverrückbar auf. Dieser Steuervorgang ist somit mit einem einzigen Steuerventil möglich.

Die Beweglichkeit der Palette 2 ermöglicht einen schnellen Einsatz und eine schnelle Umsetzung auf dem Arbeitstisch 20. Ein solcher Arbeitstisch kann somit mit mehreren Bearbeitungsgeräten bestückt sein, die verschiedene Bearbeitungsvorgänge einleiten. Wird die Montageeinrichtung 1 einem Bearbeitungsgerät, z.B. einer Presse, zugeführt und ist der Arbeitsgang vollzogen, so wird sie schnell einem anderen Bearbeitungsgerät, z.B. einem Bohrwerk, zugeführt.So läßt sich ohne Schwierigkeit eine Fertigungsstraße aufbauen bis hin zur Entnahme und Prüfung. Diese Beweglichkeit ist jedoch nur dann sinnvoll, wenn die Palette 2 auch jedem Bearbeitungsgerät so zugeführt werden kann, daß es gleich positioniert ist und Einrichtungen sich erübrigen. Zu diesem Zweck ist die Palette 2 mit einer Positioniereinrichtung 28 versehen. Diese Positioniereinrichtung 28 besteht aus Führungsleisten 29, die an der Unterseite 10 der Palette 2 angebracht sind. Diese je paarweise angeordneten Führungsleisten bilden ein nach vom offenes V, das im hinteren Bereich durch eine Querleiste 30 geschlossen ist. In den so gebildeten Innenraum zwischen den Führungsleisten 29 lassen sich Scheiben 31 unterschiedlichen Durchmessers einfügen. Werden diese Scheiben 31 auf den Arbeitstisch 20 jeweils im Bereich eines Bearbeitungsgerätes positioniert aufgebracht, so braucht die Montageeinrichtung 1 nur mit ihren V-förmigen Führungsleisten auf die positionierten Scheiben 31 geschoben zu werden. Wird dann die Palette 2 festgesetzt, befindet sich das Werkstück 6 genau in der Bearbeitungsposition. Die Scheiben 31 lassen sich auch ortsveränderlich auf dem Arbeitstisch 20 anordnen, z.B. in Führungsnuten oder verschiebbare Scheibenleisten mit Längsschlitzen zur Befestigung.

Die Führungsleisten 29 und Querleiste 30 sind in ihrer Dicke so bemessen, daß sie auch bei abgesenkter Palette 2 nicht auf dem Arbeitstisch aufliegen, so daß sie während des Verschiebevorganges der Montageeinrichtung nicht stören.

## Patentansprüche

1. Montageeinrichtung (1), die verschiedenen Bearbeitungsstationen auf einem Arbeitstisch (20) positionierbar und umsetzbar zugeführt ist, mit einer an einem Druckluftsystem angeschlossenen Palette (2), die an ihrer Unterseite (10) mit Gleit- und Festsetzelementen (11) bestückt ist und daß das Druckluftsystem im Zentrum der Elemente (11) austritt, wobei das Druckluftsystem mit einer Steuereinrichtung (22) zur Luftströmungsumkehr versehen ist, so daß bei anstehendem Luftdruck in dem Gleit- und Festsetzelement (11) ein Überdruck entsteht, der zum Aufschwimmen der Palette (2) auf dein Arbeitstisch (20) führt und bei Druckluftumkehr, infolge des im Gleit- und Festsetzelement (11) entstehenden Unterdruckes die Palette (2) auf dem Arbeitstisch (20) festsetzt, ***dadurch gekennzeichnet***, daß eine mit einer Werkstückautnahmevorrichtung (3) bestückte Palette (2) an ihrer Unterseite (10) mehrere Gleit- und Festsetzelemente (11) besitzt, die im Innern einen Hohlraum (14) bilden, der durch ein elastisches Einsatzteil (13) abdichtbar ist, und daß durch Druckluftbeaufschlagung über Zuführungskanäle in den Hohlräumen (14) Unterdruck oder Überdruck erzeugbar ist und daß bei Unterdruck die Palette (2) auf dem Arbeitstisch (20) fest aufsetzbar ist und daß bei Überdruck die Palette (2) auf dem Arbeitstisch (20) aufschwimmt und leicht verschiebbar ist und daß die Palette (2) an ihrer Unterseite (10) Führungsleisten (29) besitzt, die nicht parallel V-förmig zueinander angeordnet sind und die auf Scheiben (31) unterschiedlichen Durchmessern zur Positionierung auflaufbar sind.

2. Montageeinrichtung nach Anspruch 1, ***dadurch gekennzeichnet***, daß der Metallkörper (12) des Gleit- und Festsetzelementes (11) stufenförmig im Innern abgestzt ist, daß in diesem Innenraum ein aus elastischem Material bestehender annähernd glockenförmig gestalteter Einsatzteil (13) angeordnet ist und daß im Zentrum zwischen Metallkörper (12) und Einsatzteil (13) eine durchgehende Bohrung (19) eingebracht ist.

3. Montageeinrichtung nach Anspruch 2, ***dadurch gekennzeichnet***, daß die Wulst (17) des Einsatzteiles (13) an den Kanten (18) der Stufen (16) anliegt.

4. Montageeinrichtung nach einem der Ansprüche 1 bis 3, ***dadurch gekennzeichnet***, daß die Luftzufuhr durch eine pneumatische Steuereinrichtung (22) geregelt ist, die einen Ejektor (24) besitzt, der die Luftströmung in Abhängigkeit des Ventils (24) richtungsabhängig bestimmbar macht.

5. Montageeinrichtung nach Anspruch 1, ***dadurch gekennzeichnet***, daß an der Unterseite (10) der Palette (2) eine Positioniereinrichtung (28) angeordnet ist.

6. Montageeinrichtung nach Anspruch 5, ***dadurch gekennzeichnet***, daß die Positioniereinrichtung (28) aus Führungsleisten (29) besteht, daß die Führungsleisten paarweise nicht parallel zu einander angeordnet sind, so daß sie eine V-förmige Stellung zueinander einnehmen und daß die sich verjüngenden Enden durch eine Querleiste (30) abgeschlossen sind.

7. Montageeinrichtung nach Anspruch 6, ***dadurch gekennzeichnet***, daß die V-förmig zu einander stehenden Führungsleisten (29) auf Scheiben (31) schiebbar sind, daß die Scheiben (31) auf dem Arbeitstisch (20) positioniert sind, so daß die Palette (2) über die Scheiben (31) in ihrer Lage festsetzbar ist.

8. Montageeinrichtung nach Anspruch 7, ***dadurch gekennzeichnet,*** daß die Scheiben (31) mit unterschiedlichem Durchmesser versehen sind und somit das Auflaufen der Palette (2) in ihrer Eintauchtiefe bestimmbar ist.

9. Montageeinrichtung nach Anspruch 7, ***dadurch gekennzeichnet***, daß die Scheiben (31) auf dem Arbeitstisch (20) verschiebbar angeordnet sind.

10. Montageeinrichtung nach Anspruch 1, ***dadurch gekennzeichnet***, daß eine Montagepalette (2) eine Werkzeugaufnahmevorrichtung trägt, die mit einem Schwenkkopf (7) bestückt ist,
daß an dem Schwenkkopf (7) eine Werkstückspannvorrichtung (4) angeordnet ist, die in dem Schwenkkopf (7) drehbar gelagert ist und jeweils um 90° in einem jeden Schwenkvorgang verdrehbar ist.

## Claims

1. Assembling device (1) conveyed to different machining stations, which is adapted to be positioned and rechucked on a machining table (20 ) and which comprises a pallet (1) connected to a compressed-air system, which is equipped with sliding and fixing elements (11) on its underside (1c) in a way that the compressed-air system discharges in the centre of said elements (11), wherein said compressed-air system is provided with control means (22) for reversing the air flow such that when an air pressure is applied an overpressure is created in said sliding and fixing element (11), which causes said pallet (2) to rise on said machining table (20) and, upon reversal of the air flow, fixes said pallet (2) on said machining table (20) due to the vacuum created in said sliding and fixing element (11), ***characterised in*** that a pallet (2) equipped with a workpiece holding device (3) is provided with several sliding and fixing elements (11) on its underside (10), which elements form a space (14) inside which may be sealed by means of a resilient insert element (13) , and that by application of compressed air via supply ducts a vacuum or an overpressure can be generated in said spaces (14), and that in the case of vacuum said pallet (2) may be tightly placed on said machining table (20) and in the case of overpressure said pallet (2) rises on said machining table (20) and is easily displaceable, and that said pallet (2) is provided with guiding bars (29) on its underside (10) which are disposed in a non-parallel V-shaped arrangement and may be caused to slide onto disks (31) of different diameters for positioning.

2. Assembling device according to Claim 1, ***characterised in*** that the metal body (12) of said sliding and fixing element (11) presents a stepped offset inside, that an insert element (13) of an approximately bell-shaped configuration, which consists of a resilient material, is disposed in this inside space, and that a continuous bore (19) is formed in the centre between said metal body (12) and said insert element (13).

3. Assembling device according to Claim 2, ***characterised in*** that the bead (17) of said insert element (13) bears against the edges (18) of said steps (16).

4. Assembling device according to any of the Claims 1 to 3, ***characterised in*** that the air supply is controlled by a pneumatic controller (22) provided with an ejector (24) which permits the direction-dependent determination of the air flow as a function of the valve (24).

5. Assembling device according to Claim 1, ***characterised in*** that a positioning means (28) is arranged on the underside (10) of said pallet (2).

6. Assembling device according to Claim 5, ***characterised in*** that said positioning means (28) consists of guiding bars (29), that said guiding bars are disposed in pairs in a non-parallel arrangement relative to each other such that they take a V-shaped relative position and that the tapering ends are terminated by a transverse bar (30).

7. Assembling device according to Claim 6, ***characterised in*** that said guiding bars (29) in V-shaped arrangement relative to each other are adapted to be pushed onto disks (31), and that said disks (31) are positioned on said machining table (20) in a way that said pallet (2) may be fixed in its position via said disks (31).

8. Assembling device according to Claim 7, ***characterised in*** that said disks (31) are provided with different diameters and that thus the depth of penetration in the movement of said pallet (2) may be determined.

9. Assembling device according to Claim 7, ***characterised in*** that said disks (31) are arranged for displacement on said machining table (20).

10. Assembling device according to Claim 1, ***characterised in*** that an assembly pallet (2) carries a tool holding device equipped with a pivotable head (7), and
that a workpiece clamping device (4) is arranged on said pivotable head (7), which is supported for rotation in said pivotable head (7) and is rotatable through 90° during each pivoting operation.

## Revendications

1. Dispositif d'assemblage (1) amené aux postes d'usinages différents, qui este apte à être positionnée et remonté sur une table d'usinage (20) et qui comprend une palette (1) reliée à un système à air comprimé, laquelle palette est munie des éléments de glissement et d'immobilisation (11) à sa face inférieure (1c) de façon que le système à air comprimé sort dans le centre desdits éléments (11), dans lequel ledit système à air comprimé est pourvu des moyens de commande (22) à renverser le courant d'air de fade façon que quand une pression d'air est appliquée une surpression est ledit élément de glissement et d'immobilisation (11), qui mène à une montée de ladite (2) sur ladite table d'usinage (20) et, après le renversement du courant d'air, immobilise ladite palette (2) sur ladite table d'usinage (20) en vertu de la dépression engendrée dans ledit élément de glissement et d'immobilisation (11), ***caractérisé en ce*** qu'une palette (2), qui est pourvue d'un dispositif de fixation de pièces (3), est munie d'une pluralité desdits éléments de glissement et d'immobilisation (11) à sa face inférieure (10), lesquels éléments définissent un espace creux (14) à l'intérieur, qui peut être rendu étanche moyennant d'un élément insert élastique (13) , et en ce que par l'alimentation de l'air comprimé par des conduits d'alimentation il est possible d'établir une dépression ou une surpression dans lesdits espaces creux (14), et en ce qu'au cas de dépression ladite palette (2) peut être fermement placée sur ladite table d'usinage (20), pendant qu'au cas de surpression ladite palette (2) monte sur ladite table d'usinage (20), en étant facilement déplaçable, et en ce que ladite palette (2) est munie de barres conductrices (29) à sa face inférieure (10), que sont disposées en arrangement non parallèle en V, l'une relativement à l'autre, et sont aptes à glisser sur des disques (31) aux diamètres différents pour positionnement.

2. Dispositif d'assemblage selon la revendication 1, ***caractérisé en ce*** que le corps métallique (12) dudit élément de glissement et d'immobilisation (11) est décalé en échelon à l'intérieur, qu'un élément d'insert (13) à configuration sous forme d'une cloche environ, qui est fait d'un matériau élastique, est disposé dans cet espace creux intérieur, et en ce qu'un alésage traversant (19) est formé au milieu entre ledit corps métallique (12) et ledit élément d'insert (13).

3. Dispositif d'assemblage selon la revendication 2, ***caractérisé en ce*** que le bourrelet (17) dudit élément d'insert (13) s'appuie contre les arêtes (18) desdits paliers (16).

4. Dispositif d'assemblage selon une quelconque des revendications 1 à 3, ***caractérisé en ce*** que l'alimentation en air comprimé est commandée par un organe de commande pneumatique (22) qui est muni d'un éjecteur (24) qui permet la détermination en dépendance de la direction du courant d'air en fonction de la soupape (24).

5. Dispositif d'assemblage selon la revendication 1, ***caractérisé en ce*** qu'un moyen de positionnement (28) est disposé à la face inférieure (10) de ladite palette (2).

6. Dispositif d'assemblage selon la revendication 5, ***caractérisé en ce*** que ledit moyen de positionnement (28) consiste en barres conductrices (29), en ce que lesdites barres conductrices sont disposées en paires en arrangement non parallèle l'une relativement à l'autre, de façon qu'elles prennent une position relative en V et que les extrémités en cône soient fermées par une barre transversale (30).

7. Dispositif d'assemblage selon la revendication 6, ***caractérisé en ce*** que lesdites barres conductrices (29) en arrangement en V l'une relativement à l'autre sont aptes à être faites glisser sur des disques (31), et en ce que lesdites disques (31) sont positionnées sur ladite table d'usinage (20) de façon que ladite palette (2) peut être immobilisée en position par lesdites disques (31).

8. Dispositif d'assemblage selon la revendication 7, ***caractérisé en ce*** que lesdites disques (31) présentent des diamètres différents, en permettant ainsi une définition de la profondeur de pénétration en mouvement de ladite palette (2).

9. Dispositif d'assemblage selon la revendication 7, ***caractérisé en ce*** que lesdites disques (31) sont disposées à se déplacer sur ladite table d'usinage (20).

10. Dispositif d'assemblage selon la revendication 1, ***caractérisé en ce*** qu'une palette d'assemblage (2) porte un dispositif de raccordement d'outil, qui est muni d'une tête pivotante (7), et
en ce qu'un dispositif de serrage de pièce (4) est disposé sur ladite tête pivotante (7), qui est logé à pivoter dans ladite tête pivotante (7) et qui peut être tourné par un angle respectif de 90° au cours de chaque opération de pivotement.
